# EUROPÄISCHE PATENTSCHRIFT

(11) **EP 2 442 680 B1**
(45) Veröffentlichungstag und Bekanntmachung des Hinweises auf die Patenterteilung: **29.07.2015**
(21) Anmeldenummer: 10722949.4
(22) Anmeldetag: 27.05.2010
(51) Int. Cl.: A41D 13/12, B32B 5/26, A41F 17/00, A41D 15/00, A41D 27/10

(54) **WEGWERFBARES BEKLEIDUNGSSTÜCK**
DISPOSABLE ARTICLE OF CLOTHING
PIÈCE VESTIMENTAIRE JETABLE

(30) Priorität: 16.06.2009 DE 102009024999
(43) Veröffentlichungstag der Anmeldung: 25.04.2012
(73) Patentinhaber: Paul Hartmann Aktiengesellschaft, 89522 Heidenheim (DE)
(72) Erfinder: HÄUSSLER, Stefan, 89075 Ulm (DE); FERNAU, Martin, 89522 Heidenheim (DE); MUCHE, Marion, 89522 Heidenheim (DE); NAGEL, Eva-Maria, 73525 Schwäbisch Gmünd (DE); SCHANZ, Judith, 72189 Vöhringen (DE); WENIG, Nicole, 73463 Westhausen (DE); MUTTERER, Markus, 71397 Leutenbach (DE)
(74) Vertreter: DREISS Patentanwälte PartG mbB
(86) Internationale Anmeldenummer: PCT/EP2010/003238
(87) Internationale Veröffentlichungsnummer: WO 2010/145750

(56) Entgegenhaltungen:
- WO-A1-95/05096
- DE-A1- 10 250 275
- FR-A1- 2 709 643
- US-A- 5 025 501

## Beschreibung

Die Erfindung betrifft ein wegwerfbares Bekleidungsstück für den medizinischen, chemischen oder biologischen Bereich umfassend eine Vorderseite, eine Rückseite und Längsseiten, wobei die Vorderseite durch ein geschlossenes, insbesondere einteiliges Vorderteil und die Rückseite durch ein erstes und ein zweites Rückenteil gebildet sind, wobei die Rückenteile entlang den Längsseiten jeweils mit dem Vorderteil verbunden sind, Seitenkanten aufweisen, gegeneinander überlappbar gebildet sind, und durch das gegeneinander Überlappen im angelegten Zustand die Rückseite bilden, wobei Oberkanten an dem Vorderteil und den Rückenteilen vorgesehen sind, die in einem angelegten Zustand an einen Träger den Halsausschnitt umfassen.

Derartige wegwerfbare Bekleidungsstücke sind insbesondere Untersuchungs- oder Operationsmäntel. Wegwerfbare Bekleidungsstücke im erfindungsgemäßen Sinne weisen viele Einsatzmöglichkeiten im gesamten medizinischen Bereich, wie beispielsweise insbesondere als Bekleidungsstück für den Arzt während medizinischen Untersuchungen, während der Visite, während einer Operation, auf.

Derartige wegwerfbare Bekleidungsstücke/Operationsmäntel, die gleichermaßen auch als Operationskittel bezeichnet werden können, dienen zum Schutz des Trägers, insbesondere des Operateurs vor Flüssigkeiten und/oder Mikroorganismen, die während einer Behandlung insbesondere einer Operation eines Patienten anfallen.

Dabei tragen Chirurgen und andere im medizinischen Bereich Beschäftige während Operationen, aber auch während sonstiger Tätigkeiten im medizinischen Umfeld, wie beispielsweise für medizinische Untersuchungen, während der Visite, zumeist Überbekleidungsstücke, sogenannte Operationsmäntel oder Operationskittel, was im Folgenden synonym verwendet wird, um zum einen die Sterilität zu verbessern, aber auch um die darunter liegende Bekleidung des Trägers zu schützen. Ein derartiger Operationsmantel weist in der Regel eine Vorderseite sowie eine Rückseite auf, wobei derartige Mäntel vielfach so ausgebildet sind, dass sie ein einteiliges Vorderteil und zwei Rückenteile aufweisen, die entlang der Längsseiten miteinander verbunden sind.

Derartige Kittel werden oft aus einem atmungsaktiven Vliesmaterial hergestellt und sind als Wegwerfartikel vorgesehen.

Das Anlegen derartiger Mäntel, insofern diese als Bindekittel ausgebildet sind, erfolgt zumeist dadurch, dass der Kittel mit Verschlusselementen, zumeist in der Form von Verschlussbändern, ausgestattet ist, welche sich anfänglich im Bereich des Vorderteils erstrecken und dort mit ihren Endabschnitten an einem Anhänger (Transferkarte) gehalten sind. Die Enden der Verschlusselemente können dabei an den beiden Rückenteilen, insbesondere in Höhe der Taille oder des Bauchs befestigt sein.

Wenn der Kittel angelegt wird, ergreift ein weiterer im medizinischen Bereich Tätiger typischerweise den Anhänger, wodurch die Verschlusselemente aus dem Anhänger gelöst werden. Durch Drehen des Trägers des Operationsmantels können dann die Verschlusselemente um den Träger herumgeführt werden und schließen so einen Operationsmantel in einer Weise, dass insbesondere eine Überlappung der Rückenteile sichergestellt werden kann, und damit ein sicherer Sitz des Operationsmantels, insbesondere auch während der Operation.

Ein derartiger wegwerfbarer Operationsmantel, nämlich ein wegwerfbares Bekleidungsstück, insbesondere für den medizinischen, chemischen und biotechnologischen Bereich zum Schutz vor Flüssigkeiten und Mikroorganismen ist beispielsweise aus der DE 102 50 275 A1 vorbekannt.

US5025501 offenbart den Oberbegriff des Anspruchs 1.

Nachteilig an einer Vielzahl von Operationsmänteln sowie wegwerfbaren Bekleidungsstücken für diesen Bereich ist, dass die Operationsmäntel/Bekleidungsstücke im Nackenbereich um den Hals gut geschlossen werden müssen und hierzu in der Regel im Nacken nahe am Halsausschnitt ein Verschlusselement vorgesehen ist. Dies kann entweder durch zusätzliche Bindebänder gebildet werden, wobei jedoch die Vorsehung von Bindebändern im Nacken vergleichsweise aufwendig ist, da diese mit einer Schleife durch eine dritte Person geschlossen werden müssen. Alternativ können Klettverschlusselemente im Nackenbereich vorgesehen sein, die den Halsausschnitt nach Überlappung der Rückenteile im Halsbereich in seiner Form fixieren. Nachteilig bei der Vorsehung von derartigen Klettverschlusselementen ist jedoch, dass es beim Anlegen schnell dazu kommt, dass in entsprechende Klettverschlusselemente Haare des Trägers mit eingefügt werden, was dann zu einem unangenehmen Tragegefühl führt. Insbesondere können sich Haare auch im weiteren Verlauf des Tragens in den Klettverschlusselementen verhaken und so zu einem schmerzhaften und unbequemen Sitz des Mantels am Träger führen.

Es ist daher Aufgabe der Erfindung, ein wegwerfbares Bekleidungsstück bereitzustellen, bei dem der Nachteil vermieden werden kann, im Nacken entweder unbequeme oder unangenehm zu tragende Verbindungselemente vorzusehen und dennoch eine sichere Festlegung der Rückenteile im Halsbereich sicherzustellen.

Die Erfindung löst diese Aufgabe durch ein wegwerfbares Bekleidungsstück für den medizinischen, chemischen oder biologischen Bereich mit den Merkmalen des Anspruchs 1, bei dem am ersten Rückenteil an dessen Seitenkante ein sich ausgehend von der freien Oberkante des Rückenteils zumindest über einen Teil der Seitenkante erstreckendes Zusatzelement angeordnet ist, das eine Oberkante, und optional eine Unterkante, sowie zwei ausgehend von der Oberkante nach unten, nicht parallel zueinander verlaufende Schenkel aufweist, der erste Schenkel mit der Seitenkante des ersten Rückenteils verbunden ist und der zweite Schenkel ausgehend von der Oberkante des Zusatzelements schräg zur Längsrichtung in Richtung der Seitenkante des ersten Rückenteils verläuft und das Zusatzelement im angelegten Zustand unter dem zweiten Rückenteil anordenbar ist, und das Zusatzelement und der zweite Rückenteil einen Überlappungsbereich bilden.

Vorderseite und Rückseite des wegwerfbaren Bekleidungsstücks werden verstanden als die in Gebrauchslage des wegwerfbaren Bekleidungsstücks an einem Träger vorgesehene Ausrichtung. Längsseiten werden als die in Gebrauchslage des wegwerfbaren Bekleidungsstücks vorgesehener Übergang zwischen Vorderseite und Rückseite verstanden.

Im Rahmen dieser Erfindung bezieht sich die Längsrichtung auf die in Gebrauchslage des wegwerfbaren Bekleidungsstücks eingenommene Richtung, nämlich die Richtung entlang der Längsachse eines aufrecht stehenden Trägers des Mantels. Die Querrichtung ist die Richtung senkrecht zur Längsrichtung. Längs- bzw. Querkanten verlaufen im Wesentlichen in Längs- bzw. Querrichtung. "Breite" ist die Erstreckung in Querrichtung und "Länge" die Erstreckung in Längsrichtung. Die Längsmittelachse ist die Achse, die Vorder- bzw. Rückenteil in Längsrichtung mittig teilt.

Mit der Bezeichnung oben bzw. unten sind Positionen in der Gebrauchslage des wegwerfbaren Bekleidungsstücks, nämlich Positionen am stehenden Träger des Mantels, oben in Richtung Hals und unten in Richtung Fuss, gemeint. Wobei sich auch die Angaben proximal und distal auf die Gebrauchsposition beziehen.

Schräg zur Längsrichtung wird als jeglicher Verlauf, mit einer Neigung, also in einem von 90° abweichenden Winkel in Bezug auf die Längsrichtung verstanden.

Die Seitenkanten der Rückenteile verlaufen dabei im wesentlichen in Längsrichtung, insbesondere aber wenigstens abschnittsweise in Längsrichtung, insbesondere ausgehend von der distalen Unterkante, die insbesondere als Querkante ausgebildet ist, des Rückenteils bis zum Bauch-, Taillen-, Hüft- oder Brustbereich eines Trägers.

Dabei ist stets das erste Rückenteil das Rückenteil, das das Zusatzelement trägt und das Rückenteil, das kein Zusatzelement trägt, wird als zweites Rückenteil bezeichnet. Dabei wird das Verständnis zugrunde gelegt, dass das erste bzw. das zweite Rückenteil nicht ausschließlich einer Seite in der Gebrauchslage des Bekleidungsstücks zugeordnet sind, sondern entweder links- bzw. rechtsseitig oder umgekehrt an dem Vorderteil angeordnet sein können.

Das Vorderteil ist jeweils mit einem Rückenteil verbunden. "Verbunden" bzw. die Verbindung zwischen Vorderteil und dem jeweiligen Rückenteil im Sinne dieser Anmeldung heißt unlösbar verbunden, d.h. es ist im Rahmen des Gebrauches keine Trennung von Vorder- und Rückenteil vorgesehen.

Das Vorderteil und die Rückenteile sind entlang der Längsseiten verbunden. Die Längsseiten können dabei entlang tatsächlich nicht erkennbaren, sondern imaginären Rändern des Vorder- und der Rückenteile ausgebildet sein. In dieser Ausführungsform sind das Vorder- und die Rückenteile integral, also einstückig ausgebildet, d.h. dass die Teile tatsächlich ohne Unterbrechung ineinander übergehen.

In einer alternativen Ausführungsform sind der Vorderteil und das erste und das zweite Rückenteil aus separaten Komponenten gebildet, welche über einen Fügebereich miteinander verbunden sind. Dieser Fügebereich kann insbesondere durch adhesive Fügemittel, wie Kleber, insbesondere Hotmeltkleber und/oder insbesondere durch nicht-adhesive Fügemittel, wie insbesondere durch eine Nähnaht und/oder insbesondere durch Schweißstellen, insbesondere thermische Schweißstellen, Kalanderschweißstellen und/oder Ultraschallschweißstellen erhalten werden. Der Fügebereich kann auch eine Kombination an verschiedenen Fügemitteln aufweisen.

Durch die Vorsehung dieses Zusatzelementes, das auch als Zusatzpanel bezeichnet werden kann, wird erreicht, dass es im Bereich des oberen Rückens zu einer größeren Überlappung der Seitenteile des Mantels kommt, ohne dass die Rückenteile selbst deswegen anders ausgestaltet sein müssen.

Durch das Zuliegenkommen des Zusatzelementes des ersten Rückenteils unterhalb dem zweiten Rückenteil, an dem das Zusatzelement nicht festgelegt ist, wird eine vergleichsweise große Fläche der Überdeckung, also ein Überlappungsbereich geschaffen, auf der das zweite Rückenteil auf dem Zusatzelement "angehaftet" sein kann, insbesondere aufgrund der bestehenden Reibung zwischen dem Zusatzelement und dem zweiten Rückenteil, wobei das Zusatzelement vorzugsweise nicht über Verbindungsmittel, wie Klebe- oder Haftmittel mit dem zweiten Rückenteil in der Gebrauchslage verbunden ist.

Vorteilhafterweise weist das Zusatzelementes keine Unterkante auf, wobei der erste Schenkel des Zusatzelements, der an der Seitenkante des ersten Rückenteils angebracht ist, im Wesentlichen in Längsrichtung verläuft und lediglich der zweite Schenkel schräg zur Längsrichtung in Richtung der Seitenkante angeordnet ist, und der zweite Schenkel damit in Verbindung mit dem ersten Schenkel die Fläche des Zusatzelements begrenzt. Das Zusatzelement ist somit vorzugsweise in einer dreieckartigen Form ausgestaltet.

In einer weiteren vorteilhaften Ausführung weist das Zusatzelement eine Unterkante auf, wobei die beiden Schenkel die Oberkante und die Unterkante miteinander verbinden. Insbesondere vorzugsweise weist die Unterkante eine kürzere Erstreckung als die Oberkante auf. Insbesondere auch hier ist der erste Schenkel an der Seitenkante des ersten Rückenteils angebracht, verläuft insbesondere parallel zur Längsrichtung, und der zweite Schenkel ist schräg zur Längsrichtung in Richtung zur Seitenkante des ersten Rückenteils angeordnet. Das Zusatzelement weist vorzugsweise eine trapezoide Ausgestaltung auf.

Insbesondere vorzugsweise sind die Oberkante und die Unterkante des Zusatzelements derart bemessen, dass die Erstreckung der Oberkante zur Erstreckung der Unterkante in einem Verhältnis von mindestens 1,2:1, weiter vorzugsweise von mindestens 1,5:1, weiter vorzugsweise von mindestens 1,7:1,weiter vorzugsweise von mindestens 2,0:1, weiter vorzugsweise von mindestens 2,3:1, weiter vorzugsweise von mindestens 2,5:1 , und vorzugsweise von höchstens 10:1, weiter vorzugsweise von höchstens 8:1 weiter vorzugsweise von höchstens 6:1 , weiter vorzugsweise von höchstens 4:1 vorliegen.

Durch diese erfindungsgemäßen Ausgestaltungen des Zusatzelements kann erreicht werden, dass am Zusatzelement in Bezug auf seine flächenhafte Erstreckung im Verlauf ausgehend von der Oberkante nach unten, insbesondere im Bereich der Unterkante kein unnötiger Stoff vorhanden ist, der dann zu einem Faltenwurf führen würde, insbesondere bei einer Bewegung des Trägers.

Nach einer vorteilhaften Ausgestaltung kann dabei vorgesehen sein, dass der zweite Schenkel eine gerade oder geschwungene Form besitzt. Insbesondere kann der zweite Schenkel eine konvexe Form aufweisen, also nach außen geschwungen ausgebildet sein. Dabei kann der Schwung insbesondere so gestaltet sein, dass das Zusatzelement der Form des Rückens eines Trägers, auch in Bewegung, folgt.

Insbesondere kann vorgesehen sein, dass der Übergangsbereich zwischen erstem Schenkel und Oberkante und/oder zwischen Oberkante und zweitem Schenkel und/oder zwischen zweitem Schenkel und Unterkante und/oder zwischen erstem und zweitem Schenkel, also der jeweilige Eckbereich des Zusatzelements, nicht eckig, sondern vielmehr abgerundet ausgestaltet ist.

Die flächenhafte Erstreckung des Zusatzelements wird durch die Anordnung der beiden Schenkel, der Oberkante, und optional der Unterkante begrenzt. Der erste Schenkel und die Oberkante sind dabei in einem ersten Neigungswinkel (α) und der zweite Schenkel und die Oberkante in einem zweiten Neigungswinkel (β) angeordnet.

Insbesondere vorteilhaft ist, wenn der erste Neigungswinkel (α) in einem Bereich von 60° ≤ (α) ≤ 130°, weiter insbesondere 70° ≤ (α) ≤ 120°, weiter insbesondere 80° ≤ (α) ≤ 110°, weiter insbesondere 80° ≤ (α) ≤ 100°, weiter insbesondere 85° ≤ (α) ≤ 100° liegt, weiter insbesondere 85° ≤ (α) ≤ 95°. Ein Neigungswinkel (α) über 90° ist dahingehend vorteilhaft, da das Zusatzelement sich aufgrund der Materialführung im angelegten Zustand gut in den Schulterbereich und auch über die Schulter des Trägers erstrecken kann.

Eine vorteilhafte flächenhafte Erstreckung des Zusatzelements, insbesondere in einer dreieckförmigen Ausgestaltung wird insbesondere mit der Kombination der Neigungswinkel von (α) und (β) mit 60° ≤ (α) ≤ 130° und 85° ≥ (β) ≥ 25°, vorzugsweise 70° ≤ (α) ≤ 120° und 80° ≥ (β) ≥ 30°, weiter vorzugsweise von 80° ≤ (α) ≤ 110° und 75° ≥ (β) ≥ 40°, weiter vorzugsweise von 80° ≤ (α) 100° und 75° ≥ (β) ≥ 50°, weiter insbesondere 85° ≤ (α) ≤ 100° und 70° ≥ (β) ≥ 50°, insbesondere vorzugsweise von 85° ≤ (α) ≥ 95° und 70° ≥ (β) ≥ 55° erhalten.

Eine vorteilhafte flächenhafte Erstreckung des Zusatzelements, insbesondere in einer trapezförmigen Ausgestaltung wird insbesondere mit der Kombination der Neigungswinkel von (α) und (β) mit 60° ≤ (α) ≤ 130° und 120° ≥ (β) ≥ 35°, vorzugsweise 70° ≤ (α) ≤ 120° und 110° ≥ (β) ≥ 40°, weiter vorzugsweise von 80° ≤ (α) ≤ 110° und 100° ≥ (β) ≥ 50°, weiter vorzugsweise von 80° ≤ (α) ≤ 100° und 100° ≥ (β) ≥ 60°, weiter insbesondere 85° ≤ (α) ≤ 100° und 95° ≥ (β) ≥ 60°, insbesondere vorzugsweise von 85° ≤ (α) ≤ 95° und 95° ≥ (β) ≥ 65° erhalten.

Im Falle von abgerundeten Übergangsbereichen zwischen den jeweiligen Schenkeln und der Oberkante wird der Neigungswinkel derart bestimmt, dass der Verlauf des jeweiligen Schenkels und der Oberkante fluchtend mittels imaginären Linien fortgesetzt wird und der daraus ermittelte Schnittpunkt herangezogen wird.

Besonders bevorzugt ist, wenn sich das Zusatzelement im angelegten Zustand des Bekleidungsstücks in Querrichtung vom Rücken bis in den Schulterbereich und insbesondere auf oder über die Schulter eines Trägers erstreckt. Durch die Erstreckung insbesondere bis in den Bereich auf oder über eine Schulter wird eine besonders gute Fixierung der Bereiche aufeinander ermöglicht. Insbesondere wird dadurch, dass im Bereich der Schulter das Bekleidungsstück aufgrund seines nach unten wirkenden Gewichts durch die Schwerkraft auf das Zusatzelement aufgelegt ist und auf dieses drückt, das Zusatzelement besonders gut gegen Verrutschen fixiert.

Nach einer besonders bevorzugten Ausführungsform kann des Weiteren vorgesehen sein, dass die Seitenkante des zweiten Rückenteils, das nicht das Zusatzelement trägt, ausgehend von seiner Oberkante nach unten, unter Vergrößerung der Erstreckung des zweiten Rückenteils in Querrichtung, zur Längsrichtung schräg verläuft und insbesondere gleichläufig zum Verlauf des zweiten Schenkels des Zusatzelements schräg verläuft.

Hierdurch wird erreicht, dass der Bereich des zweiten Rückenteils, der auf dem Zusatzelement zu liegen kommt, insbesondere im Bereich des Halsausschnittes gut am Träger des Bekleidungsstücks anliegt und nicht dazu neigt, sich vom Träger abzuheben oder Falten zu werfen. Dabei kann besonders bevorzugt sein, dass die Schräge sowohl des zweiten Schenkels des Zusatzelements als auch der Seitenkante des zweiten Rückenteils, jeweils so weit verlaufen, bis an den jeweiligen Rückenteilen Verschlussmittel, insbesondere Bindebänder, vorgesehen sind. Hierdurch kann insbesondere erreicht werden, dass eine besonders gute Spannbarkeit der Rückenteile im Bereich der Seitenkante bzw. des zweiten Schenkels des Zusatzelementes ausgehend vom Hals zum Verschlussbereich erfolgt, wodurch ein besonders gutes Anliegen am Träger bereitgestellt werden kann. Auch der abgeschrägte Bereich der Seitenkante des zweiten Rückenteils kann gerade oder geschwungen ausgebildet sein.

Insbesondere ist vorgesehen, dass das Zusatzelement nur in einem oberen ersten Rückenteilabschnitt angeordnet ist, sich in Längsrichtung nur insbesondere ausgehend von der Oberkante nur bis zum Taillenbereich des Bekleidungsstücks erstreckt.

Insbesondere ist vorgesehen, dass der erste Schenkel des Zusatzelements eine größere Erstreckung aufweist als die Oberkante. Insbesondere weist der erste Schenkel in Bezug auf die Oberkante eine größere Erstreckung auf, und zwar mindestens um den Faktor 1,2 , weiter vorzugsweise mindestens um den Faktor 1,4, weiter vorzugsweise mindestens um den Faktor 1,6, weiter vorzugsweise mindestens um den Faktor 1,8 , und vorzugsweise höchstens um den Faktor 3,0, weiter vorzugsweise höchstens um den Faktor 2,8, weiter vorzugsweise höchstens um den Faktor 2,6, weiter vorzugsweise höchstens um den Faktor 2,4.

Wie bereits voranstehend erläutert, sind das erste und das zweite Rückenteil am Vorderteil entlang den Längsseiten verbunden. Das erste und das zweite Rückenteil weisen dabei vorteilhafter eine größte Breite von mindestens der Hälfte der größten Breite des Vorderteils auf. Weiter vorzugsweise weisen das erste und zweite Rückenteil jeweils die gleiche Breite auf.

Weiter vorzugsweise weisen das erste und zweite Rückenteil jeweils eine größte Breite mit einer Erstreckung auf, welche größer ist die Hälfte der größten Breite des Vorderteils. Dadurch wird vorteilhaft eine erste Überlappung der beiden Rückenteile, auch im Beinbereich sichergestellt.

Die größte Breite wird dabei an dem jeweiligen Element an seiner größten Erstreckung in Querrichtung vermessen, und zwar beim Vorderteil zwischen den beiden Längsseiten und bei den Rückenteilen jeweils zwischen Längsseite und der jeweiligen Seitenkante.

Im Falle einer einstückigen Verbindung von Vorderteil mit den jeweiligen Rückenteilen, so werden die als Längsseiten des Bekleidungsstücks ermittelten imaginären Linien als Begrenzungslinie herangezogen. Im Falle einer einstückigen Verbindung von Zusatzelement und erstem Rückenteil wird die imaginäre Seitenkante des Rückenteils zwischen Zusatzelement und Rückenteil ausgehend vom distalen, also unteren Ende der augenscheinlich erkennbaren Seitenkante und deren Verlauf folgend ermittelt.

Weiter vorzugsweise weist das Zusatzelement eine Oberkante mit einer Erstreckung auf, die einem Faktor von mindestens 0,3 der größten Breite des ersten Rückenteils, weiter insbesondere mindestens 0,4, weiter insbesondere 0,5, weiter insbesondere 0,6 und vorzugsweise von höchstens 1,5, weiter insbesondere höchstens 1,2, weiter insbesondere höchstens 1,0 entspricht.

Mit diesen Erstreckungen der Oberkante wird eine notwendige Erstreckung für den Erhalt eines optimalen Überlappungsbereiches zwischen dem Zusatzelement und dem zweiten Rückenteil bereitgestellt.

Der Überlappungsbereich zwischen Zusatzelement und zweitem Rückenteil besitzt insbesondere einen Anteil an der Fläche eines Abschnitts des zweiten Rückenteils, wobei sich der Abschnitt ausgehend von der Oberkante des zweiten Rückenteils nach unten bis zu einer Querkante erstreckt, die das untere Ende des Überlappungsbereichs definiert, von vorzugsweise mindestens 20 %, weiter vorzugsweise von mindestens 30 %, weiter vorzugsweise von mindestens 40 %, weiter vorzugsweise von mindestens 50 %, und weiter insbesondere von höchstens 80 %, weiter insbesondere von höchstens 70 %, und weiter insbesondere von höchstens 60 %.

Vorzugsweise überlappt dabei der zweite Rückenteil mindestens 70 %, insbesondere mindestens 80 % und insbesondere mindestens 90 % und insbesondere mindestens 95% und bis zu 100% der Fläche des Zusatzelements.

Besonders bevorzugt ist vorgesehen, dass im Bereich des Übergangs zwischen Oberkante des Zusatzelements und zweitem Schenkel des Zusatzelements ein Anfasselement vorgesehen ist, wobei das Anfasselement insbesondere durch ein Bandstück bzw. Bandabschnitt gebildet ist. Über das Anfasselement kann erreicht werden, dass das Zusatzelement, ohne es selber insbesondere großflächig zu berühren, über die Schulter oder auf die Schulter gelegt werden kann. Darüber hinaus bietet das Anfasselement, das dann insbesondere über die Schulter geführt werden kann, so dass es von hinten nach vorne über der Schulter liegt bzw. sich von oben nach unten im Brustbereich eines Trägers erstreckt, eine zusätzliche Verankerung des Zusatzelementes, da das Anfasselement unter den weiteren Mantelteilen zu liegen kommt.

Es kann vorgesehen sein, dass an den Rückenteilen, insbesondere im Bereich der Hüfte oder Taille oder des Bauchbereichs, Verschlussbänder oder Bindebänder vorgesehen sind, die zum Teil an den Seitenkanten der Rückenteile angebracht sind. Diese Verschlussbänder können zum Verschließen des Kittels in herkömmlicher Weise dienen und insbesondere an einer Transferkarte in herkömmlicher Weise festgelegt sein, aus der die Bänder dann bei einem Anziehen des Bekleidungsstücks entnommen werden können, so dass eine zweite Person dann dem das Bekleidungsstück Tragenden beim Anziehen hilft, indem die Bänder gehalten werden und sich die tragende Person um die eigene Achse dreht.

Der Kittel kann dabei insbesondere als Bindekittel ausgestaltet sein.

Insbesondere vorzugsweise ist ein erstes Verschlusselement, insbesondere ein erstes Bindeband am zweiten Rückenteil an der Seitenkante, insbesondere im Bereich des Übergangs des schräg verlaufenden Teils der Seitenkante zum in Längsrichtung verlaufenden Teil der Seitenkante, angebracht. Dieses erste Bindeband ist dafür vorgesehen, im angelegten Zustand des Bekleidungsstücks, von der Rückseite, dabei das erste Rückenteil überspannend, um die dem ersten Rückenteil zugeordnete Längsseite herum zur Vorderseite geführt zu werden, um auf der Vorderseite mit seinem freien Bandende entsprechend fixiert zu werden. Insbesondere kann das erste Bindeband durch Verknoten mit einem weiteren zweiten Bindeband, welches auf der Vorderseite befestigt ist, im angelegten _Zustand des Bekleidungsstücks festgelegt werden. Insbesondere ist das weitere zweite Bindeband auf der Vorderseite festgelegt und dort in einem Bereich zwischen der Längsmittelachse des Vorderteils und der Längsseite, entlang der das Vorderteil mit dem ersten Rückenteil verbunden ist. Das zweite Bindeband kann ein freies Bandende bereitstellen.

Das Zusatzelement kann sich insbesondere im Bereich oberhalb der Verschlusselemente erstrecken und insbesondere kurz oberhalb der Verschlusselemente enden. Auf diese Weise wird insbesondere bei einem Wickelkittel eine besonders gute Verspannung und damit ein besonders gutes Anlegen an einen Träger durch das Verschlusselement sowie das zweite Rückenteil erreicht.

Weiterhin können Ärmel, die im Bereich der Verbindung von Vorder- zu Rückenteil angeordnet sind, vorgesehen sein. Die Ärmel können dabei an ihren unteren, nicht mit dem Vorder- und Rückenteil verbundenen Enden Bündchen aufweisen, wobei die Bündchen insbesondere separate Öffnungen für die Daumen neben den Öffnungen für die Hände aufweisen. Hierdurch kann erreicht werden, dass sich die Ärmel nicht unbewusst nach oben Richtung Ellbogen hochstreifen lassen, sondern die Ärmel bleiben sicher unten im Bereich der Hände fixiert. Die Bündchen können dann zu jedem Zeitpunkt sicher von Handschuhen übergriffen werden, so dass eine möglichst weitgehende Sterilität erreicht werden kann.

Das Zusatzelement ist mit seinem ersten Schenkel mit der Seitenkante des ersten Rückenteils verbunden. "Verbunden" bzw. die Verbindung zwischen erstem Schenkel des Zusatzelements und der Seitenkante des ersten Rückenteils im Sinne dieser Anmeldung heißt unlösbar verbunden, d.h. es ist im Rahmen des Gebrauches keine Trennung von erstem Rückenteil und Zusatzelement, entlang der Seitenkante und des zweiten Schenkels vorgesehen.

Besonders bevorzugt kann das Zusatzelement ein separates, an den ersten Rückenteil, und zwar an dessen Seitenkante, vorzugsweise über einen Fügebereich mittels Fügemitteln, wie insbesondere eine Naht-, Klebe- oder Schweißverbindung, oder über Kombinationen an Fügemitteln angestücktes Element sein. Insbesondere bevorzugt wird das Zusatzelement über Schweißverbindungen, insbesondere Ultraschallschweißverbindungen an dem ersten Rückenteil entlang dessen Seitenkante verbunden.

Vorteilhafterweise kann der Fügebereich zwischen dem ersten Schenkel des Zusatzelements und der Seitenkante des ersten Rückenteils derart gestaltet sein, dass durch diese Verbindung, also durch den Fügebereich die Reibungskräfte zwischen den überlappenden Elementen, nämlich dem Zusatzelement und dem zweiten Rückenteil, erhöht werden und so eine besonders gute Haftung beider Teile aufeinander erreicht werden kann.

Alternativ kann auch eine fügemittelfreie, also eine einstückige Verbindung von Zusatzelement mit dem Rückenteil, also vom zweiten Schenkel des Zusatzelements mit der Seitenkante des ersten Rückenteils vorgesehen sein. Unter einstückig im Sinne dieser Anmeldung wird verstanden, dass der erste Rückenteil und das Zusatzelement zumindest eine integral miteinander verbundene Materiallage aufweisen. Besonders vorzugsweise sind der erste Rückenteil und das Zusatzelement aus einem identischen Material gebildet. In einer alternativen bevorzugten Ausführungsform ist aber durchaus denkbar, trotz einstückiger Verbindung von Zusatzelement und erstem Rückenteil, dass sich das erste Rückenteil und das Zusatzelement in ihrer Materialzusammensetzung unterscheiden, was so bspw. durch das Aufbringen weiterer Lagen oder Beschichtungen, insbesondere auf den ersten Rückenteil und/oder das Zusatzelement bildenden Materialien oder Materialabschnitten resultieren kann. Damit wird vorteilhafterweise in einer technisch einfach ausführbaren Form eine Verbindung zwischen dem ersten Rückenteil und dem Zusatzelement bereitgestellt und der erste Rückenteil und/oder das Zusatzelement wird mit den für den vorgesehenen Einsatzbereich notwendigen Materialeigenschaften, wie bspw. Absorptionsfähigkeit, Wasserundurchlässigkeit, Atmungsaktivität, Wasserdampfdurchlässigkeit, Reibungskraft, Haftkraft, Reißfestigkeit ausgerüstet.

Im Falle einer einstückigen Verbindung von Zusatzelement und erstem Rückenteil ist die Seitenkante des ersten Rückenteils nicht tatsächlich erkennbar, sondern als imaginäre Seitenkante ausgebildet. Ausgehend vom distalen, also unteren Ende der Seitenkante des ersten Rückenteils wird diese augenscheinlich erkennbare Seitenkante des ersten Rückenteils in ihrem Verlauf folgend als imaginäre Seitenkante zwischen erstem Rückenteil und Zusatzelement fortgeführt.

Besonders wichtig ist dabei, dass das Bekleidungsstück im Bereich des Halsausschnittes befestigungsmittelfrei ausgebildet ist. Auf diese Weise können die bisher unangenehmen Begleiterscheinungen, nämlich entweder das aufwendige Binden einer Schleife oder die Probleme, die sich aus der Vorsehung eines Klettverschlusses im Halsbereich ergeben, verhindert werden. Unangenehmes Einhaken der Haare am Klettverschluss kann so sicher verhindert werden.

Das Bekleidungsstück kann dabei insbesondere ein Vliesmaterial als äußere Schicht umfassen. Zusätzlich kann des Weiteren vorgesehen sein, dass zumindest in Teilbereichen, vorzugsweise auf der Vorderseite und/oder im Bereich der Ärmel, Verstärkungsmaterialien vorgesehen sind, die insbesondere aus einem Vlies-Folien-Laminat gebildet werden können. Hierdurch kann erreicht werden, dass in Bereichen, die besonders stark mit Flüssigkeit und/oder Mikroorganismen belastet sind, die Barrierewirkung erhöht werden kann. Insbesondere kann vorgesehen sein, dass bei einem Vlies-Folien-Material die Folie atmungsaktiv ausgebildet ist, beispielsweise durch Verwendung einer Polypropylenfolie oder Polyethylenfolie, in die ein Füllmittel, beispielsweise Calciumcarbonat, eingebracht ist, so dass dann Mikroporen durch Verrecken der Folie entstehen.

Als Vliesmaterial für die äußere Schicht des Bekleidungsstücks und/oder als Vliesmaterial-Komponente im Vlies-Folien-Laminat, wird bevorzugt Spunbond(S) und/oder Meltblown(M), oder Laminate aus Spunbond- und/oder Meltblownvlieslagen oder insbesondere Laminate aus Spunbond- und Meltblownvlieslagen, wie insbesondere SM, SMS, SMMS oder SMMMS eingesetzt. Das Material kann dabei verschiedene Eigenschaften haben, je nachdem ob und gegebenenfalls in welcher Kombination in einem Laminat Spunbond- oder Meltblownschichten umfasst sind.

Besonders bevorzugt besteht das Vliesmaterial aus Polyethylen und/oder Polypropylen und/oder aus Mischungen davon als Hauptkomponente. Besonders bevorzugt weist das Vliesmaterial ein Flächengewicht von insbesondere 15- 50 g/m², weiter insbesondere von 20 - 45 g/m², besonders bevorzugt von 25 - 40 g/m² auf. Insbesondere bevorzugt sind die eingesetzten Vliesmaterialien, auch solche im Vlies-Folien-Laminat hydrophilisiert.

Die Laminierung der Vlies-Folien-Laminate kann auf jegliche Art erfolgen, vorzugsweise sind Vlies und Folie mittels Thermobonding und/oder Kleber, insbesondere Hotmeltkleber verbunden. Insbesondere bevorzugt werden thermogebundene Vlies-Folien-Laminate eingesetzt.

Die das Zusatzelement und den ersten Rückenteil bildende Komponenten und/oder das übrige Bekleidungsstück können unterschiedliche und/oder identische Materialien aufweisen.

In einer vorteilhaften Ausführung ist das Zusatzelement dabei aus dem gleichen Material wie das erste Rückenteil und/oder das übrige Bekleidungsstück gebildet. Als Material wird insbesondere das voranstehend dargestellte Vliesmaterial für die äußere Schicht des Bekleidungsstücks eingesetzt.

Dies kann bei der Herstellung des Bekleidungsstücks vorteilhaft sein, da beispielsweise im Falle eines an den ersten Rückenteil über Fügemittel angestückten Zusatzelements die Abstimmung der Fügemittel hinsichtlich ihrer Tauglichkeit weniger kritisch ist als bei Auswahl von Fügemitteln für unterschiedliche Materialien.

In einer alternativen vorteilhaften Ausführung ist das Zusatzelement aus einem von dem ersten Rückenteil und/oder das übrige Bekleidungsstück bildenden Material verschiedenen Material gebildet. Als Material für diese Ausführungsform des Zusatzelements wird insbesondere bevorzugt auch ein Vliesmaterial eingesetzt. Als Vliesmaterial wird hierbei bevorzugt Spunbond(S)-Material und/oder Meltblown(M)-Material als einzelne Lagen oder auch in Form von Laminaten aus Spunbond- und/oder Meltblownvlieslagen oder insbesondere Laminate aus Spunbond- und Meltblownvlieslagen, wie insbesondere SM, SMS, SMMS oder SMMMS eingesetzt. Besonders bevorzugt besteht das Vliesmaterial aus Polyethylen und/oder Polypropylen und/oder aus Mischungen davon als Hauptkomponente.

Insbesondere vorzugsweise kann das Zusatzelement aus einem dünneren Material, also mit einem geringeren Flächengewicht als das erste Rückenteil und/oder das übrige Bekleidungsstück gebildet sein. Insbesondere vorzugsweise kann ein Vliesmaterial mit einem Flächengewicht von insbesondere 15-35 g/m², weiter insbesondere von 15 - 30 g/m², besonders bevorzugt von 15 - 25 g/m² eingesetzt werden.

Dies ist u.a. auch unter Einsparung von Materialkosten als vorteilhaft zu sehen, zudem es im Bereich des Zusatzelementes aufgrund dessen Anordnung auf der Rückseite ohnehin weniger zu einer Belastung mit Flüssigkeiten oder Mikroorganismen kommt. Zudem ist aufgrund der Überlappung von Zusatzelement und zweitem Rückenteil, wobei das Zusatzelement im angelegten Zustand des Bekleidungsstück von dem zweiten Rückenteil zumindest teilweise überdeckt wird, eine Ausstattung von besonders dicken und auch dichten Materialien nicht notwendig, da die eigentliche Barrierefunktion bereits im Wesentlichen von dem Material des zweiten Rückenteils übernommen wird.

In einer besonderen Ausführung kann das Zusatzelement atmungsaktiv ausgebildet sein, insbesondere atmungsaktiver als das Material des ersten und/oder zweiten Rückenteils und/oder des übrigen Bekleidungsstücks.

Schließlich kann vorgesehen sein, dass das Bekleidungsstück eine Längenverstellung umfassen kann. Dies bietet den Vorteil, dass individuell eine Anpassung der Länge des Bekleidungsstücks an den Träger erfolgen kann. Dies kann z. B. dadurch realisiert werden, dass ein Bereich des Mantels entlang einer ringsum verlaufenden Faltlinie nach oben oder unten umgefaltet wird und in diese Position fixiert wird, z. B. über Bänder, adhäsive oder kohäsive Haftmittel oder Klettelemente.

weitere Vorteile und Merkmale der Erfindung ergeben sich aus den übrigen Anmeldungsunterlagen. Die Erfindung wird im Folgenden anhand einer Zeichnung näher erläutert. Dabei zeigen:
- Figur 1: ein Schnittmuster für ein erfindungsgemäßes Bekleidungsstück;
- Figur 2: ein Bekleidungsstück vor dem Schließen der Verschlusselemente von hinten;
- Figur 3: das Bekleidungsstück gemäß Figur 2 von vorne und
- Figur 4: einen unverschlossenen Mantel von hinten,
- Figur 5: in den Darstellungen a) bis h) das Falten eines erfindungsgemäßen Bekleidungsstücks,
- Figur 6: einen Ausschnitt eines Ärmels.

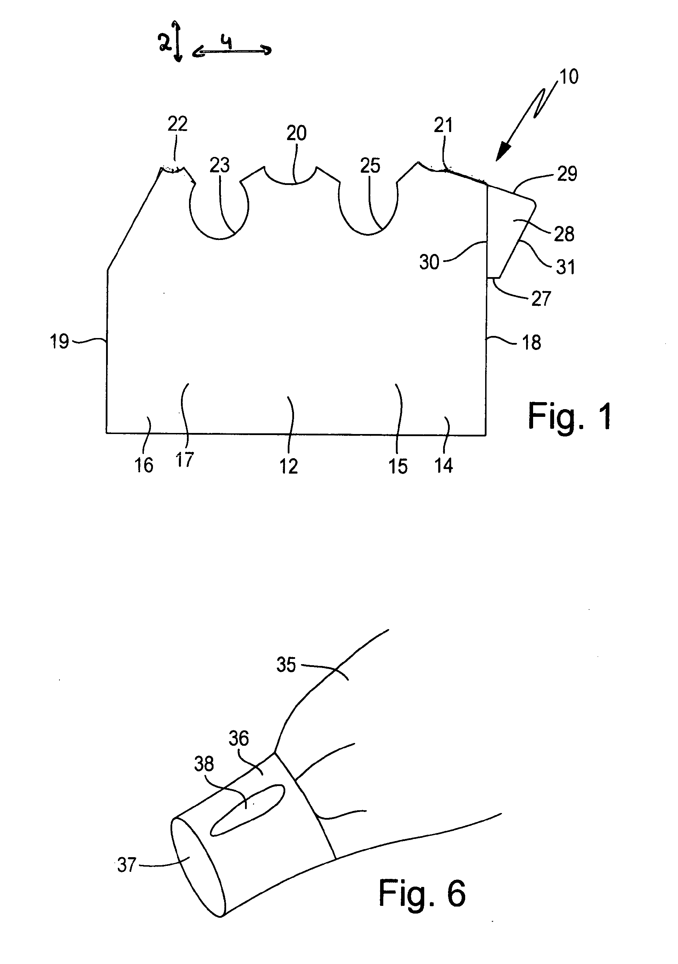

Dabei zeigt Figur 1 ein Schnittmuster für ein Bekleidungsstück, das in seiner Gesamtheit mit dem Bezugszeichen 10 versehen ist. Dabei umfasst das Bekleidungsstück ein Vorderteil 12 sowie zwei Rückenteile 14 und 16. Die Rückenteile 14 und 16 sind entlang den späteren Längsseiten 15 und 17 an dem Vorderteil angesetzt, wobei die Rückenteile 14 und 16 mit dem Vorderteil 12 einstückig verbunden sind. Darüber hinaus weisen die Rückenteile 14 und 16 die im Wesentlichen in Längsrichtung 2 verlaufenden Seitenkanten 18 und 19 auf, mit denen die Rückenteile im späteren Tragezustand einander zumindest bereichsweise in Querrichtung 4 überlappen können.

Darüber hinaus umfassen der Vorderteil 12 sowie die Rückenteile 14 und 16 Oberkanten 20, 21 und 22, die im späteren zusammengefügten Zustand den Halsausschnitt umfassen sowie z. B. Schulterpartien bilden. Des Weiteren sind zwei Ärmelausschnitte 23 und 25 vorgesehen. Die Ärmel sind dabei mit ihrem proximalen Ende zwischen Vorderteil 12 und Rückenteilen 14 und 16 aufgenommen.

An dem ersten Rückenteil 14 ist ein separates Zusatzelement 28 angeordnet, das eine trapezartige Form aufweist mit einer Ober- und einer Unterkante 27, 29, wobei die Oberkante mit 29 und die Unterkante mit 27 bezeichnet ist. Die Oberkante 29 ist dabei länger als die Unterkante 27 ausgebildet. Dadurch verläuft der zweite Seitenschenkel 31 schräg von oben nach unten auf die Seitenkante 18 des Rückenteils 14 zu. Der erste Schenkel 30 ist unmittelbar über einen Fügebereich mittels Fügemittel, wobei insbesondere Verschweißen, insbesondere Ultraschallverschweißen eingesetzt wird, mit der Seitenkante 18 verbunden.

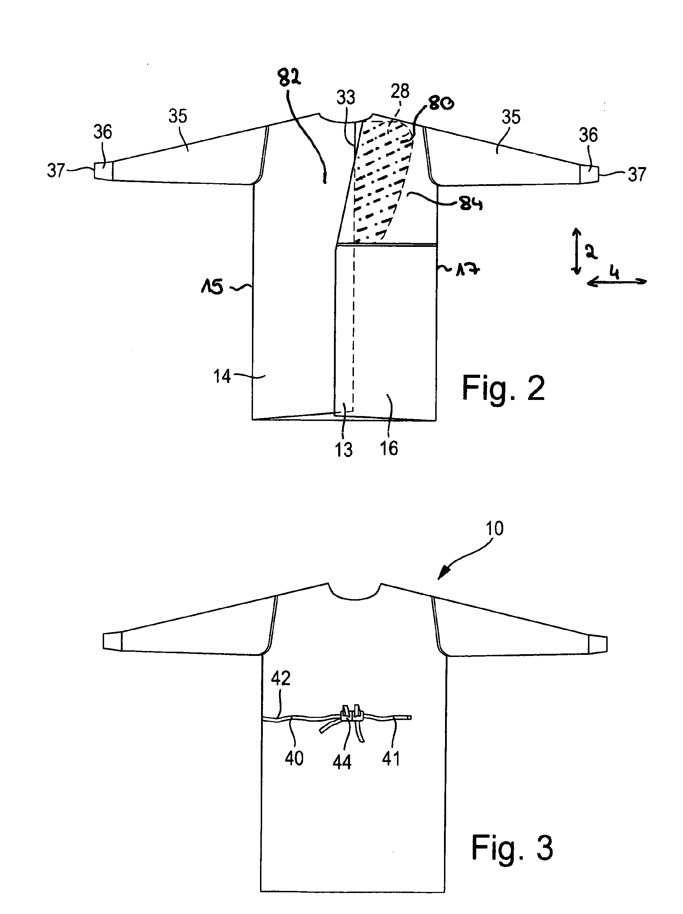

Figur 2 zeigt nun den fertigen Mantel mit einer Längsrichtung 2 und einer Querrichtung 4, und mit angesetzten Ärmeln 35, die an ihren den Händen zugewandten distalen Enden mit Bündchen 36 ausgestattet sind, wobei die Bündchen sogenannte Daumenlöcher aufweisen, so dass die Daumen durch separate Öffnungen verschieden von den Öffnungen 37 zum Austritt für die Hände hindurchgestreckt werden können, wodurch verhindert wird, dass sich die Ärmel ungewollt nach oben in Richtung auf die Ellbogen verschieben und Haut zwischen Handschuhen und den Bündchen freigelegt wird.

Dabei liegt im angezogenen Zustand das Zusatzelement 28 unter dem zweiten Rückenteil 16 unter Ausbildung eines Überlappungsbereiches 80. Der erste Rückenteil 14 umfasst dabei einen ersten oberen Rückenteilabschnitt 82, der sich von der Oberkante 21 bis zum Taillenbereich erstreckt. Der zweite Rückenteil 16 umfasst einen zweiten oberen Rückenteilabschnitt 84, der sich von der Oberkante 22 bis zum Taillenbereich erstreckt.

Dabei liegt im angezogenen Zustand das Zusatzelement 28 unter dem zweiten Rückenteil 16, so dass der zweite Rückenteil 16 haftend hierauf festgelegt ist bzw. das Zusatzelement 28 haftend unter dem Rückenteil 16. Durch die Verwendung von Vliesstofflaminaten, die eine aufgeraute Oberfläche besitzen, kann die Haftung der einzelnen Elemente, nämlich des zweiten Rückenteils 16 und des Zusatzelements 28, aufeinander noch verstärkt werden. Darüber hinaus wird die Reibung der beiden Teile aufeinander durch den Fügebereich 33 entlang der Seitenkante des ersten Rückenteils 14 und dem ersten Schenkel des Zusatzelements 28 noch weiter erhöht, da der Fügebereich 33 durch den zweiten Rückenteil 16 ebenfalls übergriffen wird.

Durch diese aufeinander vorliegende Reibung der Abschnitte wird erreicht, dass das Zusatzelement 28 sicher unter dem zweiten Rückenteil 16 gehalten ist und so der Halsausschnitt, der durch die Oberkanten 20, 21 und 22 gebildet wird, sicher geschlossen gehalten werden kann, ohne dass weitere Befestigungselemente, wie Klettverschlüsse oder Bindebänder, im Halsbereich notwendig sind.

Das Zusatzelement erstreckt sich dabei bis in den Bereich der Schulter eines Trägers und kann vorzugsweise noch über die Schulter hinweg geführt werden. Das erste Rückenteil 14 kommt dabei ebenfalls zumindest abschnittsweise mit dem Abschnitt, der hier mit dem Bezugszeichen 13 bezeichnet ist, unter dem zweiten Rückenteil 16 zu liegen.

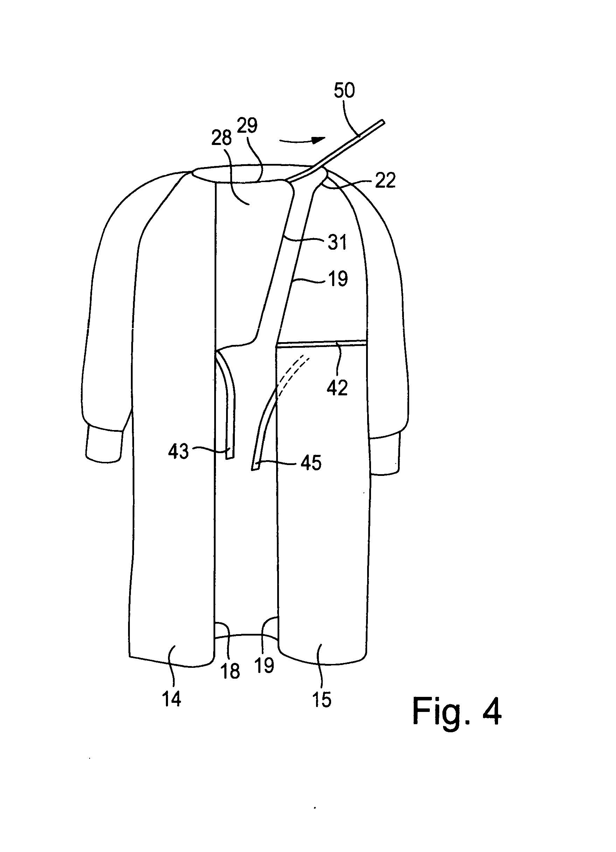

Figur 3 zeigt nun den Kittel gemäß Figur 2 von vorne, wobei hier ein Teil der Verschlusselemente 40 zu sehen ist, die durch ein Bandelement 42 und ein Bandelement 41 gebildet sind, die in einer Transferkarte 44 festgelegt sind. Wird nun das Bekleidungsstück 10 an einem Träger angelegt, so erfolgt zunächst die Festlegung in der in Figur 2 gezeigten Position, wobei, wie nachfolgend gezeigt wird, zwei Bänder im Rücken geschlossen werden. Alsdann nimmt eine zweite Person die Transferkarte 44 und löst das Bandelement 42 hieraus. Das Bandelement 42 wird dann um den Träger herumgeführt, indem sich der Träger mit dem Bekleidungsstück dreht. Es erfolgt dann eine Festlegung des Bandelements 42 mit dem Bandelement 41, das ebenfalls aus der Transferkarte entnommen wird, durch Verknoten der beiden Bandelemente. Figur 4 zeigt nun die Gestaltung der Rückseite mit einem weiteren Verschlusselement. Hierbei wird zunächst, bevor das Verschlusselement bestehend aus den Bandelementen 41 und 42 geschlossen wird, eine erste Fixierung der Rückenteile 14 und 16 zueinander vorgenommen, indem die Verschlusselemente 43 und 45 miteinander beispielsweise über eine Schleife oder einen Knoten verbunden werden. Das Verschlusselement 43 ist dabei an der Seitenkante 18 des ersten Rückenteils 14 und unmittelbar unterhalb des Zusatzelements 28 angebracht. Das Verschlusselement 45 befindet sich nicht im Bereich der Seitenkante 19, sondern ein Stück in Richtung auf das Vorderteil 12 versetzt, und an der Innenseite angebracht. Hierdurch kann erreicht werden, dass nach Verbinden der Verschlusselemente 43 und 45 ein in Längsrichtung verlaufender Restbereich des Rückenteils verbleibt, der dann mit dem Bandelement 42 fixiert werden kann und eine Überlappung der Rückenteile 14, 16 ermöglicht.

Darüber hinaus weist das Bekleidungsstück 10 einen Anfassabschnitt 50 auf, der am Zusatzelement 28, und zwar dort im Bereich der Oberkante 29, im Übergang zum zweiten Schenkel 31 angeordnet ist. Über den Anfassabschnitt 50 kann das Zusatzelement fixiert werden, und zwar insbesondere derart, dass der Anfassabschnitt 50 über die Schulter eines Trägers nach vorne in den Brustbereich geführt und dort hängen gelassen wird und so zusätzlich das Zusatzelement 28 sichert. Dies erfolgt dadurch, dass im Bereich der Schulter der Mantel auch über die Schwerkraft auf dem Anfassabschnitt 50 zu liegen kommt. Dabei erfolgt die Anordnung des Zusatzelements 28 zuerst und danach die Verbindung der Verschlusselemente 43 und 45, wonach dann die Verschlusselemente 41 und 42 miteinander verbunden werden.

Das Zusatzelement 28 reicht dabei in Längsrichtung bis unmittelbar zum Bereich des Verschlusselements 43, das gleich unterhalb des Zusatzelementes 28 beginnt. Darüber hinaus kann Figur 4 gut entnommen werden, dass auch der zweite Rückenteil 16 im Bereich ausgehend von der Oberkante 22 bis unmittelbar in den Bereich, in dem das Verschlusselement 42 festgelegt ist, eine Abschrägung seiner Seitenkante 17, unter Vergrößerung der Erstreckung des zweiten Rückenteils in Querrichtung nach unten zur Taille hin, aufweist, wobei die Abschrägung im Wesentlichen parallel zur Schräge des zweiten Schenkels 31 verläuft. Grundsätzlich können jedoch auch gekrümmte Schenkel sowie Seitenkanten vorgesehen sein. Durch die Vorsehung der Schrägen lässt sich zum einen das Zusatzelement 28 besonders gut über den Ansatzpunkt zwischen der Oberkante 29 des Zusatzelements und dem zweiten Schenkel 31 in Richtung auf das Verschlusselement 43 zu spannen. Das Gleiche gilt im Wesentlichen für die Seitenkante 19 und den hier schrägen Verlauf vom Halsausschnitt 22 zum Verschlusselement 45. Der Schenkel bzw. die Seitenkante folgt durch ihre Abschrägung dann dem Verlauf der jeweiligen Zugrichtung am Anfasselement bzw. Verschlusselement. Überzählige Materialabschnitte, die beispielsweise Falten schlagen könnten, werden so vermieden und alle Bereiche können sicher auf Spannung gehalten und damit in eine gute Passform gebracht werden.

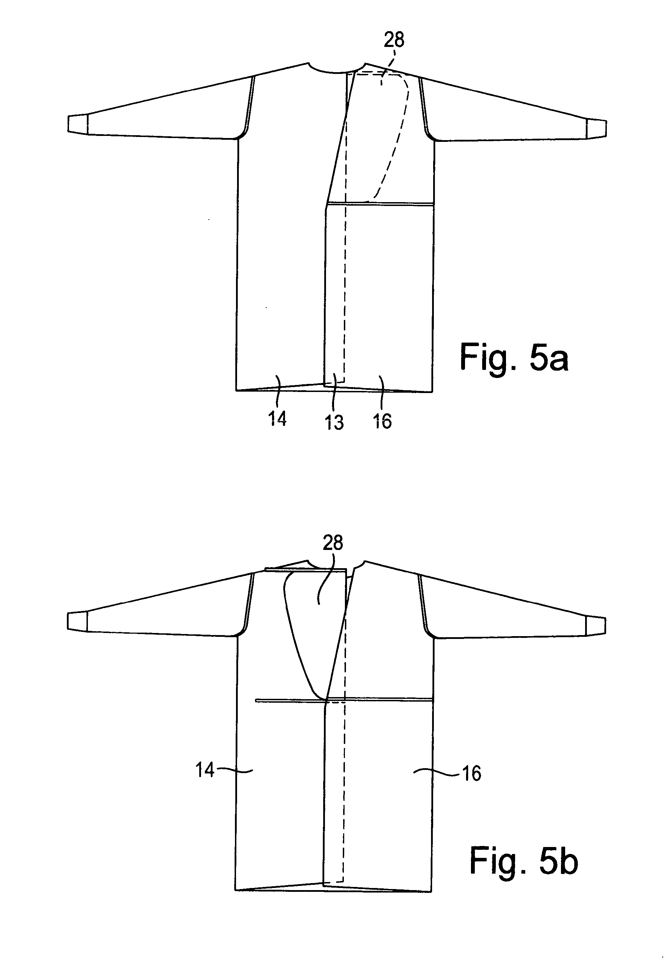

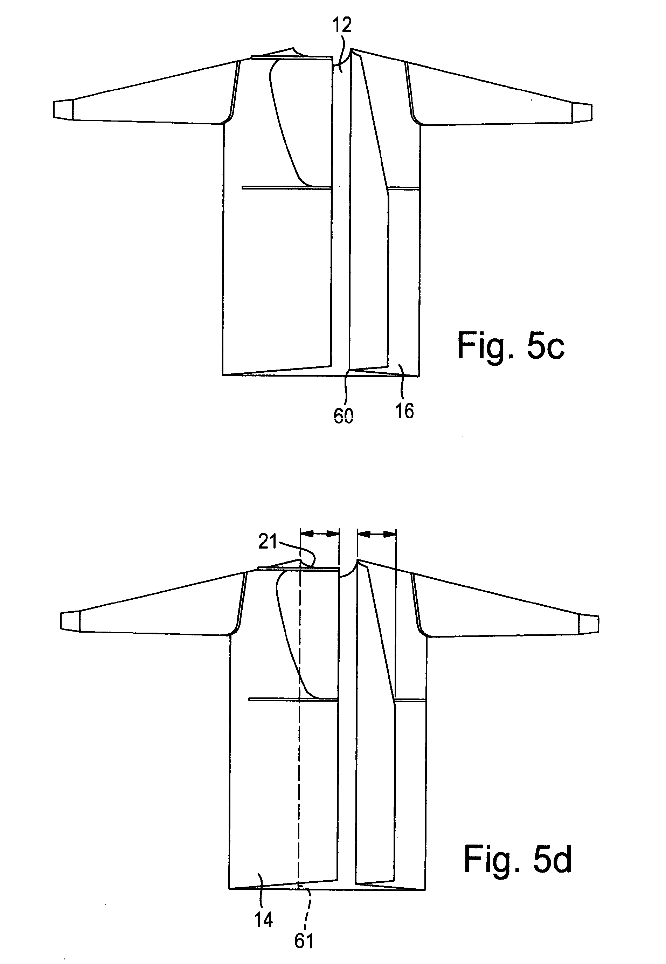

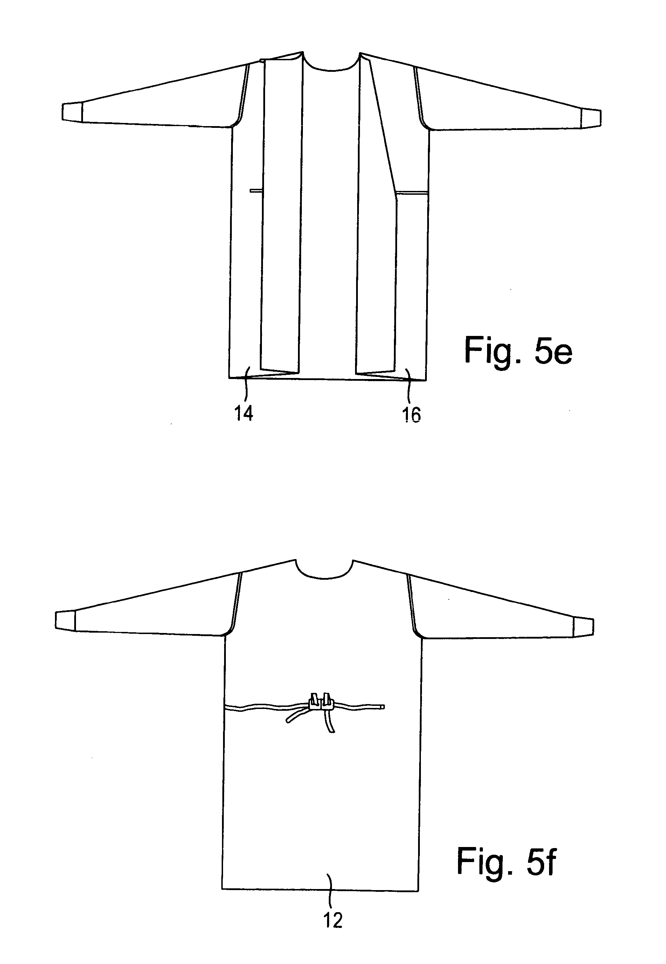

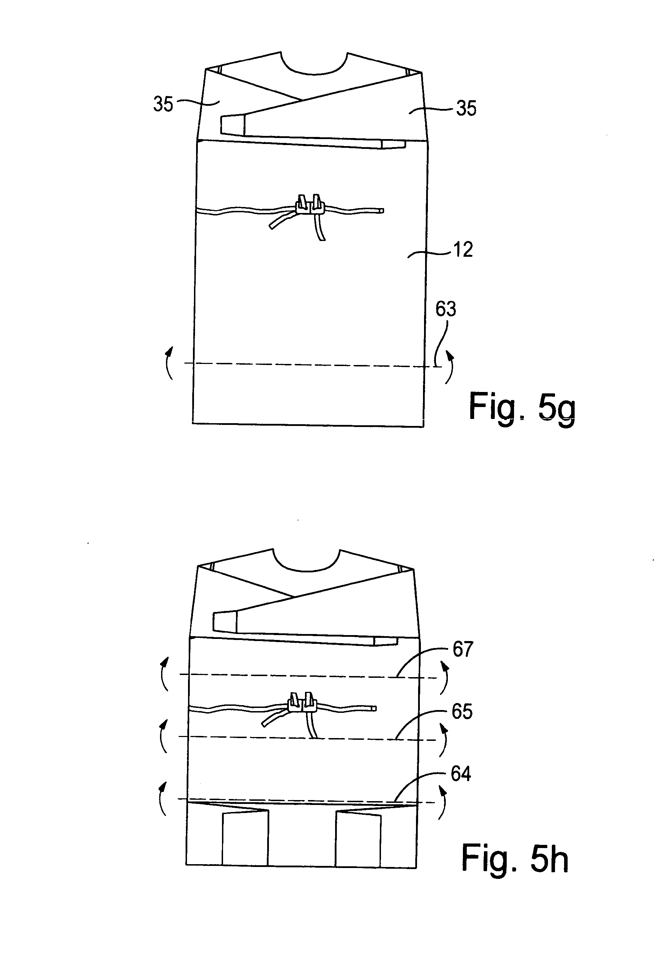

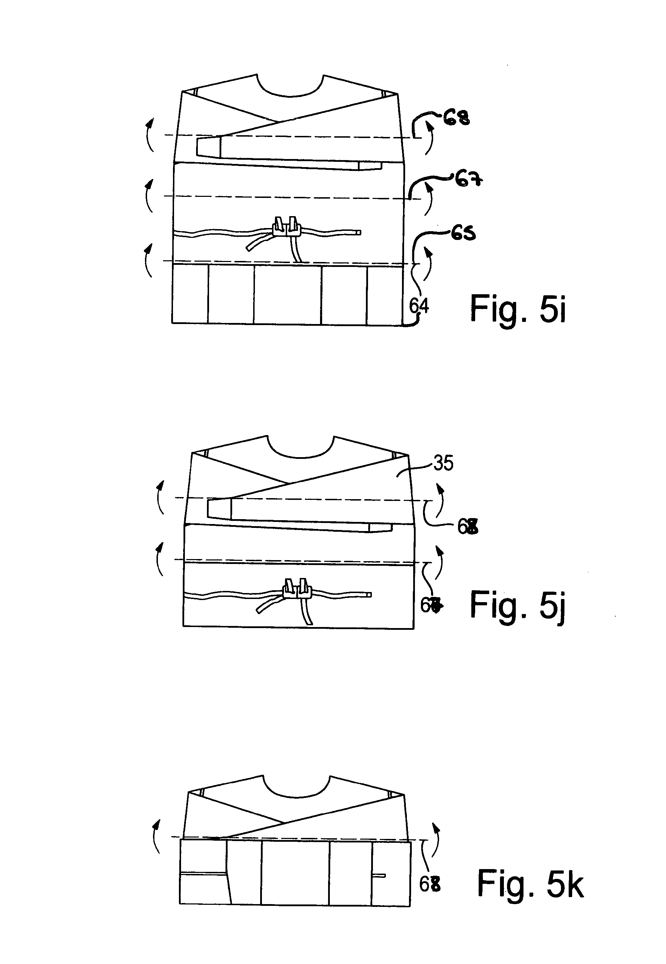

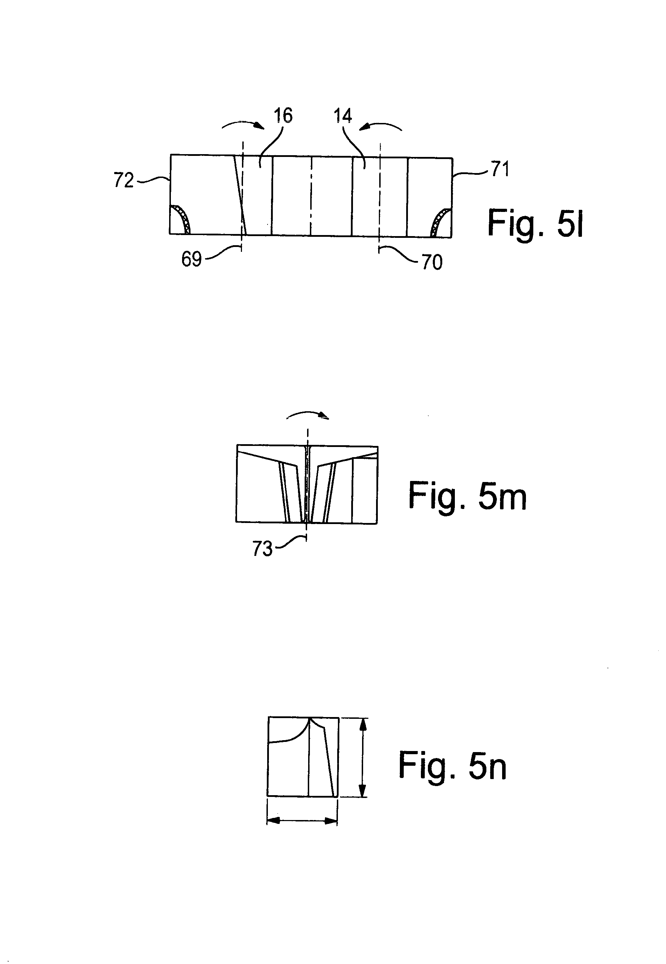

Figur 5 zeigt nun das Falten eines erfindungsgemäßen Kittels, wobei Figur 5a der Darstellung in Figur 2 entspricht.

Hierbei ist das Zusatzelement 28 unter dem zweiten Rückenteil 16 in einer Außenansicht angeordnet sowie ein Abschnitt 13 des ersten Rückenteils 14 unter ebenfalls einem Teil des zweiten Rückenteils 16. Der erste Faltschritt besteht nun darin, dass das Zusatzelement 28 auf die Außenseite des ersten Rückenteils 14 zurückgeklappt wird, und sich so im Wesentlichen nicht länger unterhalb des anderen zweiten Rückenteils 16 befindet. In einem nächsten Faltschritt erfolgt dann die Faltung des zweiten Rückenteils 16 um eine in Längsrichtung verlaufende Faltlinie 60, die durch den Übergang des zweiten Rückenteils 16 vom Halsausschnitt in den Schulterbereich definiert wird. Dies ist in Darstellung c) gezeigt. Auf ebensolche Weise erfolgt eine Faltung des ersten Rückenteils 14 um eine Faltlinie 61, die ebenfalls in Längsrichtung verläuft und ebenfalls definiert ist durch das Ende der Oberkante 21, die in diesem Bereich vom Halsausschnitt in den Schulterbereich übergeht. Darstellung d) zeigt diesen Faltschritt und Darstellung e) den nun so fertig umgelegten Mantel mit den auf sich selbst umgeklappten Rückenteilen 14 und 16. Der Mantel wird danach gewendet, so dass nun die Vorderseite 12 auf den Betrachter zuweist, wobei die Darstellung derjenigen in Figur 3 entspricht.

In Darstellung g) ist nun gezeigt, dass zunächst die beiden Ärmel 35 auf dem Vorderteil 14 im Wesentlichen in Querrichtung aufeinander geschlagen werden, indem diese um ihre Ansatzlinien nach vorne auf den Vorderteil umgelegt werden. Es erfolgt dann ein Umschlag der Unterkante des Vorderteils 12 sowie der Rückenteile 14 und 16 um quer verlaufende Faltlinien, wobei die Faltlinien so gewählt werden, dass in etwa vier gleich große Abschnitte definiert werden können und die letzte Faltlinie unterhalb der umgelegten Ärmel endet. Diese Faltlinien sind in Darstellung h) mit 63, 64, 65 und 67 bezeichnet. Das distale untere Ende des Mantels wird nun entlang dieser Faltlinien, wie in Darstellung h) gezeigt, auf die Vorderseite umgeklappt, wobei Darstellung i) das Umlegen um die Faltlinie 65 zeigt und Darstellung j) den Schritt des Umlegens um die Faltlinie 67. Eine weitere Faltlinie 68 ist dann im Bereich der Ärmel 35 vorgesehen und der Bereich ausgehend von der Unterkante wird um die Faltlinie 68 gefaltet, bis sich ein in Darstellung 1) gezeigtes im Wesentlichen rechteckiges Paket ergibt. Die beiden Kanten 71 und 72 des Pakets, die in Längsrichtung des Mantels verlaufen, werden dann um in Längsrichtung verlaufende Faltlinien 69 und 70, die so angeordnet sind, dass nach Umlegen der Kanten 71 und 72 zur Mitte auf eine Mittelachse 73 zu, die in Darstellung m) gezeigt ist, die Kanten 71 und 72 im Wesentlichen gegeneinander anliegen. Um diese Mittelachse 73 erfolgt dann ein schlussendliches Zusammenfalten, so dass sich ein handlich zusammengefaltetes Bekleidungsstück wie in Darstellung h) gezeigt ergibt, der gegebenenfalls verpackt und sterilisiert werden kann.

Figur 6 zeigt nun ein unteres Ende eines Ärmels 35 im Bereich der Bündchen 36 mit der Öffnung 37 für den Austritt der Hände sowie der Daumenöffnung 38, die dem Daumen eine separate Öffnung gewährt.

Besonders vorteilhaft beim erfindungsgemäß beschriebenen Bekleidungsstück ist dabei, dass auf Befestigungselemente im Bereich des Halsausschnitts verzichtet werden kann durch die Vorsehung eines Zusatzelementes 28, das unter dem zweiten Rückenteil 16 zu liegen kommt und insbesondere bis in den Bereich der Schulter oder auf oder über die Schulter eines Trägers reicht. Hierdurch kann verhindert werden, dass Haare während des Tragens oder beim Anlegen des Bekleidungsstücks 10 sich in Befestigungselementen verfangen oder Befestigungselemente aufwendig geschlossen werden müssen.

Darüber hinaus ist es besonders vorteilhaft, dass ein Anfassabschnitt 50 vorgesehen, der ein weitgehend steriles Anlegen des Bekleidungsstücks 10 auch im Bereich des Zusatzelementes 28 ermöglicht, ohne dass hier ein Kontakt zum Zusatzelement 28 notwendig ist.

Schließlich besteht ein weiterer besonderer Vorteil der Erfindung darin, dass neben dem abgeschrägten Zusatzelement 28 entlang des Schenkels 31 auch die zweite Seitenkante 19 des weiteren zweiten Rückenteils 16, an dem kein Zusatzelement 28 angeordnet ist, abgeschrägt ist, so dass sich über die Zuglinien, die sich über den Anfassabschnitt 50 sowie die Bindebänder 42 und 43 ergeben, eine gute Passform des Bekleidungsstücks 10 ergibt, ohne dass Teile des Mantels sich vom Körper eines Trägers abheben oder in Falten legen.

Das Bekleidungsstück 10 kann dabei vorzugsweise aus einem Vliesmaterial bestehen, insbesondere aus einem Material, bei dem Spunbond (S)- und/oder Meltblowns(M)-schichten miteinander zu einem Laminat verbunden sind, wobei insbesondere ein SMS-, oder ein SMMS aus einem Polypropylenvliesmaterial vorgesehen sein kann.

Darüber hinaus kann vorgesehen sein, dass in bestimmten Bereichen, vorzugsweise im Bereich der Vorderseite im Brust-, Bauch- bis zu den Kniebereichen, sowie insbesondere im Bereich der Ärmel 35 ausgehend von den Bündchen 36 bis über die Ellbogen Verstärkungseinsätze vorgesehen sind, die insbesondere aus einem Vlies-Folien-Laminat gebildet sein können, insbesondere aus einem Polypropylen-Spunbond-Material, das mit einer Polyethylenfolie, die als Füllstoff Calciumcarbonat enthält und verreckt worden ist zur Bildung von Mikroporositäten, verbunden ist. Alternativ können die Ärmel 35 auch unmittelbar aus einem Vlies-Folien-Laminat gebildet sein. Auf diese Weise kann auch in den verstärkten Bereichen eine Atmungsaktivität des Materials bereitgestellt werden.

## Patentansprüche

1. Wegwerfbares Bekleidungsstück (10) umfassend eine Vorderseite, eine Rückseite und Längsseiten (15, 17), wobei die Vorderseite durch ein geschlossenes, insbesondere einteiliges Vorderteil (12) und die Rückseite durch ein erstes und ein zweites Rückenteil (14, 16) gebildet sind, wobei die Rückenteile (14, 16) entlang den Längsseiten (15, 17) jeweils mit dem Vorderteil (12) verbunden sind, Seitenkanten (18, 19) aufweisen, einander überlappbar ausgebildet sind und durch das gegeneinander Überlappen in einem angelegten Zustand die Rückseite bilden, wobei freie Oberkanten (20, 21, 22) an dem Vorderteil (12) und den Rückenteilen (14, 16) vorgesehen sind, die in einem angelegten Zustand den Halsausschnitt umfassen, und wobei insbesondere Ärmel (35) im Bereich der Verbindung von Vorder- (12) zu Rückenteilen (14, 16) vorgesehen sind, **wobei** nur am ersten Rückenteil (14) ein Zusatzelement (28) angeordnet ist, das sich ausgehend von der freien Oberkante (21) des ersten Rückenteils (14) zumindest über einen Teil der Seitenkante (18) in Längsrichtung (2) erstreckt, wobei das Zusatzelement (28) eine Oberkante (29), und optional eine Unterkante (27), sowie zwei ausgehend von der Oberkante (29) nach unten, nicht parallel zueinander verlaufende Schenkel (30, 31) aufweist, wobei der erste Schenkel (30) mit der Seitenkante (18) des ersten Rückenteils (14) verbunden ist und das Zusatzelement (28) im angelegten Zustand unter dem zweiten Rückenteil (16) anordenbar ist, und das Zusatzelement (28) und das zweite Rückenteil (16) einen Überlappungsbereich (80) bilden, **dadurch gekennzeichnet, dass** der zweite Schenkel (31) ausgehend von der Oberkante (29) des Zusatzelements (28) schräg zur Längsrichtung in Richtung zur Seitenkante (18) des ersten Rückenteils (14) verläuft.

2. Wegwerfbares Operationsmantel nach Anspruch 1, **dadurch gekennzeichnet, dass** das Zusatzelement (28) eine Unterkante (27) aufweist, wobei diese Unterkante (27) eine kürzere Erstreckung aufweist, als die Oberkante (29).

3. Wegwerfbarer Operationsmantel nach einem der vorangehenden Ansprüche, **dadurch gekennzeichnet, dass** das Zusatzelement (28) eine trapezoide oder dreieckartige Form aufweist.

4. Wegwerfbarer Operationsmantel nach einem der vorangehenden Ansprüche, **dadurch gekennzeichnet, dass** in einer dreieckförmigen Ausgestaltung des Zusatzelements (28) der erste Schenkel (30) und die Oberkante (29) in einem ersten Neigungswinkel (α) und der zweite Schenkel (31) und die Oberkante (29) in einem zweiten Neigungswinkel (β) angeordnet sind, mit der Kombination der Neigungswinkel von (α) und (β) mit 60° ≤ (α) 130° und 85° ≥ (β) ≥ 25°, vorzugsweise 70° ≤ (α) ≤ 120° und 80° ≥ (β) ≥ 30°, weiter vorzugsweise von 80° ≤ (α) 110° und 75° ≥ (β) ≥ 40°, weiter vorzugsweise von 80° ≤ (α) ≤ 100° und 75° ≥ (β) ≥ 50°, weiter insbesondere 85° ≤ (α) ≤ 100° und 70° ≥ (β) ≤ 50°, insbesondere vorzugsweise von 85° ≤ (α) ≤ 95° und 70° ≥ (β) ≥ 55°.

5. Wegwerfbarer Operationsmantel nach einem der vorangehenden Ansprüche, **dadurch gekennzeichnet, dass** in einer trapezförmigen Ausgestaltung des Zusatzelements (28) der erste Schenkel (30) und die Oberkante (29) in einem ersten Neigungswinkel (α) und der zweite Schenkel (31) und die Oberkante (29) in einem zweiten Neigungswinkel (β) angeordnet sind, mit der Kombination der Neigungswinkel von (α) und (β) mit 60° ≤ (α) ≤ 130° und 120° ≥ (β) ≥ 35°, vorzugsweise 700 ≤ (α) ≤ 120° und 110° ≥ (β) ≥ 40°, weiter vorzugsweise von 80° ≤ (α) ≤ 110° und 100° ≥ (β) ≥ 50°, weiter vorzugsweise von 80° ≤ (α) ≤ 100° und 100° ≥ (β) ≥ 60°, weiter insbesondere 85° ≤ (α) ≤ 100° und 95°≥ (β) ≥ 60°, insbesondere vorzugsweise von 85° ≤ (α) ≤ 95° und 95° ≥ (β) ≥ 65°.

6. Wegwerfbarer Operationsmantel nach einem der vorangehenden Ansprüche, **dadurch gekennzeichnet, dass** das Zusatzelement nur in einem oberen ersten Rückenteilabschnitt (82) angeordnet ist, sich insbesondere in Längsrichtung nur bis zum Taillenbereich des Operationsmantels erstreckt.

7. Wegwerfbarer Operationsmantel nach einem der vorangehenden Ansprüche, **dadurch gekennzeichnet, dass** das Zusatzelement (28) sich im angelegten Zustand des Operationsmantels (10) in Querrichtung vom Rücken bis in den Schulterbereich und insbesondere auf oder über die Schulter eines Trägers erstreckt.

8. Wegwerfbarer Operationsmantel nach einem der vorangehenden Ansprüche, **dadurch gekennzeichnet, dass** die Seitenkante (19) des zweiten Rückenteils (16) ausgehend von der Oberkante (22) nach unten unter Vergrößerung der Erstreckung des zweiten Rückenteils (16) in Querrichtung schräg verläuft, und insbesondere gleichläufig zum zweiten Schenkel (31) des Zusatzelements (28) schräg verläuft.

9. Wegwerfbarer Operationsmantel nach Anspruch 8, **dadurch gekennzeichnet, dass** die Seitenkante (19) des zweiten Rückenteils (16) nur im oberen zweiten Rückenteilabschnitt (84) schräg verläuft, und weiter insbesondere nur bis zum Taillenbereich schräg und davon ausgehend nach unten im Wesentlichen in Längsrichtung verläuft.

10. Wegwerfbarer Operationsmantel nach einem der vorangehenden Ansprüche, **dadurch gekennzeichnet, dass** im Bereich des Übergangs zwischen Oberkante (29) des Zusatzelements (28) und zweitem Schenkel (31) des Zusatzelements (28) ein Anfasselement (50), insbesondere in Form eines Bandabschnitts vorgesehen ist.

11. Wegwerfbarer Operationsmantel nach einem der vorangehenden Ansprüche, **dadurch gekennzeichnet, dass** an den Rückenteilen (14, 16) und/oder dem Vorderteil (12) Verschlusselemente (40-45), insbesondere Verschlussbänder angebracht sind, insbesondere die Verschlusselemente (40-45) im Taillen- oder Hüftbereich angebracht sind.

12. Wegwerfbarer Operationsmantel nach Anspruch 11 und 8 , **dadurch gekennzeichnet, dass** ein Verschlusselement, insbesondere ein Verschlussband (42) am zweiten Rückenteil(16) an der Seitenkante (19) im Bereich des Übergangs des schräg verlaufenden Teils der Seitenkante (19)zum in Längsrichtung verlaufenden Teil der Seitenkante (19)angebracht ist.

13. Wegwerfbarer Operationsmantel nach Anspruch 11 oder 12, **dadurch gekennzeichnet, dass** sich das Zusatzelement (28) oberhalb der Verschlusselemente (40-45) erstreckt.

14. Wegwerfbarer Operationsmantel nach einem der vorangehenden Ansprüche, **dadurch gekennzeichnet, dass** das Zusatzelement (28) als separates an den ersten Rückenteil (14), vorzugsweise über eine Naht- oder Schweißverbindung (33) angestücktes Element ausgebildet ist oder einstückig mit dem ersten Rückenteil (14) verbunden ist.

15. Wegwerfbarer Operationsmantel nach einem der vorangehenden Ansprüche, **dadurch gekennzeichnet, dass** er im Bereich des Halsausschnitts befestigungsmittelfrei ausgebildet ist.

16. Wegwerfbarer Operationsmantel nach einem der vorangehenden Ansprüche, **dadurch gekennzeichnet, dass** das Zusatzelement (28) aus einem gleichen Vliesmaterial wie die äußere Schicht des Vorderteils(12) und/oder der Rückenteile (14, 16) oder einem anderen, insbesondere dünneren Vliesmaterial als die äußere Schicht des Vorder-(12) und/oder der Rückenteile (14, 16) gebildet ist.

## Claims

1. A disposable article of clothing (10), including a front side, a back side, and longitudinal sides (15, 17), in which the front side is formed by a closed, in particular one-piece front part (12) and the back side is formed by a first and a second back part (14, 16), and the back parts (14, 16) are each joined to the front part (12) along the longitudinal sides (15, 17) and have side edges (18, 19), are embodied as capable of overlapping one another, and as a result of the mutual overlapping, they form the back side when the clothing is worn, and free upper edges (20, 21, 22) are provided on the front part (12) and the back parts (14, 16), which upper edges, when the article of is worn they surround the neck opening, and in particular, sleeves (35) are provided in the vicinity of the connection of the front part (12) with the back parts (14, 16), and only on the first back part (14) is there a supplementary element (28), which beginning at the free upper edge (21) of the first back part (14) extends over at least part of the side edge (18) in the longitudinal direction (2), and the supplementary element (28) and has an upper edge (29) and optionally a lower edge (27), as well as two side edges (30, 31), beginning at the upper edge (29) and extending downward but not parallel to one another, the first side edge (30) being joined to the side edge (18) of the first back part (14) and the supplementary element (28), when the article of clothing is worn, can be disposed underneath the second back part (16), and the supplementary element (28) and the second back part (16) form an overlapping region (80), **characterized in that** the second side edge (31), beginning at the upper edge (29) of the supplementary element (28), extends obliquely to the longitudinal direction in the direction toward the side edge (18) of the first back part (14).

2. The disposable surgical gown of claim 1, **characterized in that** the supplementary element (28) has a lower edge (27), and this lower edge (27) has a shorter length than the upper edge (29).

3. The disposable surgical gown of one of the foregoing claims, **characterized in that** the supplementary element (28) has a trapezoidal or triangular shape.

4. The disposable surgical gown of one of the foregoing claims, **characterized in that** in a triangular embodiment of the supplementary element (28), the first side edge (30) and the upper edge (29) are located at a first angle of inclination (α) and the second side edge (31) and the upper edge (29) are located a second angle of inclination (β), with the combination of the angles of inclination of (α) and (β) being 60° ≤ (α) ≤ 130° and 85° ≥ (β) ≥ 25°, preferably 70° ≤ (α) ≤ 120° and 80° ≥ (β) ≥ 30°, also preferably 80° ≤ (α) ≤ 110° and 75° ≥ (β) ≥ 40°, also preferably 80° ≤ (α) ≤ 100° and 75° ≥ (β) ≥ 50°, also in particular 85° ≤ (α) ≤ 100° and 700 ≥ (β) ≥ 50°, in particular preferably 85° ≤ (α) ≤ 95° and 70° ≥ (β) ≥ 55°.

5. The disposable surgical gown of one of the foregoing claims, **characterized in that** in a trapezoidal embodiment of the supplementary element (28), the first side edge (30) and the upper edge (29) are located at a first angle of inclination (α) and the second side edge (31) and the upper edge (29) are located at a second angle of inclination (β), with the combination of the angles of inclination of (α) and (β) being 60° ≤ (α) ≤ 130° and 120° ≥ (β) ≥ 35°, preferably 70° ≤ (α) ≤ 120° and 110° ≥ (β) ≥ 40°, also preferably 80° ≤ (α) ≤ 110° and 100° ≥ (β) ≥ 50°, also preferably 80° ≤ (α) ≤ 100° and 100° ≥ (β) ≥ 60°, also in particular 85° ≤ (α) ≤ 100° and 95° ≥ (β) ≥ 60°, in particular preferably 850 ≤ (α) ≤ 95° and 95° ≥ (β) ≥ 65°.

6. The disposable surgical gown of one of the foregoing claims, **characterized in that** the supplementary element is located only in an upper, first back part portion (82), and in particular in the longitudinal direction extends only as far as the waist area of the surgical gown.

7. The disposable surgical gown of one of the foregoing claims, **characterized in that** the supplementary element (28), when the surgical gown (10) is worn, extends in the transverse direction from the back to the shoulder region, and in particular onto or over the shoulder of a wearer.

8. The disposable surgical gown of one of the foregoing claims, **characterized in that** the side edge (19) of the second back part (16), beginning at the upper edge (22), extends downward obliquely in the transverse direction, increasing the length of the second back part (16), and in particular extends obliquely in the same direction parallel to the second side edge (31) of the supplementary element (28).

9. The disposable surgical gown of claim 8, **characterized in that** the side edge (19) of the second back part (16) extends obliquely only in the upper, second back part portion (84), and furthermore in particular extends obliquely only as far as the waist area and beginning there extends downward essentially in the longitudinal direction.

10. The disposable surgical gown of one of the foregoing claims, **characterized in that** in the vicinity of the transition between the upper edge (29) of the supplementary element (28) and the second side edge (31) of the supplementary element (28), there is an element (50) for grasping, in particular in the form of a sash portion.

11. The disposable surgical gown of one of the foregoing claims, **characterized in that** closure elements (40-45), in particular closure sashes, are attached to the back parts (14, 16) and/or the front part (12), and in particular the closure elements (40-45) are attached in the waist or hip area.

12. The disposable surgical gown of claims 11 and 8, **characterized in that** a closure element, in particular a closure sash (42), is attached to the second back part (16) on the side edge (19) in the vicinity of the transition from the obliquely extending part of the side edge (19) to the longitudinally extending part of the side edge (19).

13. The disposable surgical gown of claim 11 or 12, **characterized in that** the supplementary element (28) extends on top of the closure elements (40-45).

14. The disposable surgical gown of one of the foregoing claims, **characterized in that** the supplementary element (28) is embodied as a separate element, attached to the first back part (14), preferably via a seam or a bonded connection (33), or is joined integrally to the first back part (14).

15. The disposable surgical gown of one of the foregoing claims, **characterized in that** in the vicinity of the neck opening, it is embodied free of fastening means.

16. The disposable surgical gown of one of the foregoing claims, **characterized in that** the supplementary element (28) is formed of the same nonwoven material as the outer layer of the front part (12) and/or of the back parts (14, 16), or of a different, in particular thinner, nonwoven material than the outer layer of the front part (12) and/or of the back parts (14, 16).

## Revendications

1. Vêtement jetable (10) comprenant une face avant, une face arrière et des côtés longitudinaux (15, 17), la face avant étant formée par une partie avant (12) fermée, en particulier composée d'une seule pièce, et la face arrière étant formée par une première et une seconde partie arrière (14, 16), chaque partie arrière (14, 16) étant reliée le long des côtés longitudinaux (15, 17) à la partie avant (12), présentant des bords latéraux (18, 19), étant conçue de manière à pouvoir recouvrir l'autre et constituer la face arrière lorsque ces parties sont mises en place et se recouvrent mutuellement, des bords supérieurs (20, 21, 22) libres de la partie avant (12) et les parties arrière (14, 16) délimitant le décolleté lorsqu'ils sont mis en place, et en particulier des manches (35) étant prévues au niveau de la liaison des faces avant (12) et arrière (14, 16), une pièce supplémentaire (28), laquelle s'étend du bord supérieur libre (21) de la première partie arrière (14), au moins sur une partie du bord latéral (18) dans la direction longitudinale (2), n'étant disposée que sur la première partie arrière (14), cette pièce supplémentaire (28) présentant un bord supérieur (29) et, éventuellement, un bord inférieur (27) ainsi que deux côtés (30, 31) partant du bord supérieur (29) vers le bas, non parallèles l'un à l'autre, le premier côté (30) étant relié au bord latéral (18) de la première partie arrière (14), la pièce supplémentaire (28) pouvant être placée sous la deuxième partie arrière (16) lorsqu'elle est mise en place, et la pièce complémentaire (28) et la seconde partie arrière (16) formant une zone de chevauchement (80), **caractérisé en ce que** le second côté (31) partant du bord supérieur (29) de la pièce supplémentaire (28) s'étend en direction du bord latéral (18) de la première partie arrière (14), en biais par rapport à la direction longitudinale.

2. Manteau opératoire jetable selon la revendication 1, **caractérisé en ce que** la pièce supplémentaire (28) présente un bord inférieur (27), ce bord inférieur (27) présentant une étendue plus courte que le bord supérieur (29).

3. Manteau opératoire jetable selon l'une quelconque des revendications précédentes, **caractérisé en ce que** la pièce supplémentaire (28) présente une forme trapézoïdale ou triangulaire.

4. Manteau opératoire jetable selon l'une quelconque des revendications précédentes, **caractérisé en ce que**, dans une configuration triangulaire de la pièce supplémentaire (28), le premier côté (30) et le bord supérieur (29) forment un premier angle d'inclinaison (α) et le second côté (31) et le bord supérieur (29) forment un second angle d'inclinaison (β), avec la combinaison des angles d'inclinaison (α) et (β) associée à 60° ≤ (α) ≤ 130° et 85° ≥ (β) ≥ 25°, de préférence 70° ≤ (α) ≤ 120° et 80° ≥ (β) ≥ 30°, de préférence encore 800 ≤ (α) ≤ 110° et 75° ≥ (β) ≥ 40°, de préférence encore 80° ≤ (α) ≤ 100° et 75° ≥ (β) ≥ 50°, plus préférentiellement 85° ≤ (α) ≤ 100° et 70° ≥ (β) ≥ 50°, de préférence encore 85° ≤ (α) ≤ 95° et 70° ≥ (β) ≥ 55°.

5. Manteau opératoire jetable selon l'une quelconque des revendications précédentes, **caractérisé en ce que** dans une configuration trapézoïdale de la pièce supplémentaire (28), le premier côté (30) et le bord supérieur (29) forment un premier angle d'inclinaison (α) et le second côté (31) et le bord supérieur (29) forment un second angle d'inclinaison (β), avec la combinaison des angles d'inclinaison (α) et (β) associée à 60° ≤ (α)≤ 130° et 120° ≥ (β) ≥ 35°, de préférence 70° ≤ (α) ≤ 120° et 110° ≥ (β) ≥ 40°, de préférence encore 80°≤ (α) ≤ 110° et 100° ≥ (β) ≥ 50°, de préférence encore 80° ≤ (α) ≤ 100° et 100° ≥ (β) ≥ 60°, plus préférentiellement 85° ≤ (α) ≤ 100° et 95° ≥ (β) ≥ 60°, de préférence encore 85° ≤ (α) ≥ 95° et 95° ≥ (β) ≥ 65°.

6. Manteau opératoire jetable selon l'une quelconque des revendications précédentes, **caractérisé en ce que** la pièce supplémentaire n'est placée que dans une première section de partie arrière supérieure (82), ne s'étend en particulier dans la direction longitudinale que jusqu'à la zone de la taille du manteau opératoire.

7. Manteau opératoire jetable selon l'une quelconque des revendications précédentes, **caractérisé en ce que** la pièce supplémentaire (28) s'étend, une fois le manteau opératoire (10) mis en place, dans la direction transversale du dos jusque dans la zone des épaules et en particulier sur ou au-dessus des épaules d'un porteur.

8. Manteau opératoire jetable selon l'une quelconque des revendications précédentes, **caractérisé en ce que** le bord latéral (19) de la seconde partie arrière (16) s'étend en biais dans la direction transversale du bord supérieur (22) vers le bas, avec augmentation de l'étendue de la seconde partie arrière (16), et en particulier parallèlement au second côté (31) de la pièce supplémentaire (28).

9. Manteau opératoire jetable selon la revendication 8, **caractérisé en ce que** le bord latéral (19) de la seconde partie arrière (16) ne s'étend en biais que dans la seconde section de partie arrière supérieure (84), et ne s'étend plus particulièrement en biais que jusqu'à la zone de la taille et de celle-ci vers le bas sensiblement dans la direction longitudinale.

10. Manteau opératoire jetable selon l'une quelconque des revendications précédentes, **caractérisé en ce qu'**un élément de préhension (50), prenant en particulier la forme d'une section de sangle, est présent dans la zone de la transition entre le bord supérieur (29) de la pièce supplémentaire (28) et le second côté (31) de la pièce supplémentaire (28).

11. Manteau opératoire jetable selon l'une quelconque des revendications précédentes, **caractérisé en ce que** des éléments de fermeture (40-45), en particulier des sangles de fermeture, sont fixés sur les parties arrière (14, 16) et/ou la partie avant (12), les éléments de fermeture (40-45) étant fixés en particulier dans la zone de la taille ou des hanches.

12. Manteau opératoire jetable selon les revendications 11 et 8, **caractérisé en ce qu'**un élément de fermeture, en particulier une sangle de fermeture (42), est fixé au niveau de la seconde partie arrière (16) sur le bord latéral (19) dans la zone de la transition entre la partie s'étendant en biais du bord latéral (19) et la partie du bord latéral (19) s'étendant dans la direction longitudinale.

13. Manteau opératoire jetable selon la revendication 11 ou 12, **caractérisé en ce que** la pièce supplémentaire (28) s'étend au-dessus des éléments de fermeture (40-45).

14. Manteau opératoire jetable selon l'une quelconque des revendications précédentes, **caractérisé en ce que** la pièce supplémentaire (28) est réalisée sous la forme d'une pièce séparée rapportée sur la première partie arrière (14), de préférence par l'intermédiaire d'un assemblage par couture ou par soudure (33), ou est reliée d'une seule pièce à la première partie arrière (14).

15. Manteau opératoire jetable selon l'une quelconque des revendications précédentes, **caractérisé en ce qu'**il est formé dans la zone de l'encolure sans moyens de fixation.

16. Manteau opératoire jetable selon l'une quelconque des revendications précédentes, **caractérisé en ce que** la pièce supplémentaire (28) est composée d'un matériau non tissé identique à celui de la couche extérieure de la partie avant (12) et/ou des parties arrière (14, 16) ou d'un autre matériau non tissé, en particulier plus mince que la couche extérieure de la partie avant (12) et/ou des parties arrière (14, 16).
